# EUROPEAN PATENT APPLICATION

(11) **EP 4 579 910 A1**
(43) Date of publication of application: **02.07.2025**
(21) Application number: 24866654.7
(22) Date of filing: 19.09.2024
(51) Int. Cl.: H01M 50/24, H01M 50/204, H01M 10/658

(54) **PACK CASE**

(30) Priority: 19.09.2023 KR 20230125115; 13.09.2024 KR 20240125621
(71) Applicant: LG Energy Solution, Ltd., Seoul 07335 (KR)
(72) Inventor: JANG, Byung Do, Daejeon 34122 (KR)
(74) Representative: Plasseraud IP
(86) International application number: PCT/KR2024/096157
(87) International publication number: WO 2025/063808

(57) **Abstract**

A pack case includes a lower housing forming an accommodation space, a lower reinforcement plate mounted in the accommodation space of the lower housing and configured to support at least one cell assembly, and an upper housing coupled to the lower housing to seal the accommodation space, wherein a mechanical strength of the lower housing is smaller than a mechanical strength of the lower reinforcement plate.

## Description

### [Technical Field]

The present disclosure relates to a pack case in which a lower housing of the pack case can be expanded when a thermal runaway occurs, thereby effectively suppressing a rapid increase in internal pressure even in a pack mounting structure in which an upper margin space is extremely limited by a vehicle chassis.

This application claims the benefit of priority from Korean Patent Application No. 10-2023-0125115, filed on September 19, 2023, and Korean Patent Application No. 10-2024-0125621, filed on September 13, 2024, and all of the contents of the Korean Patent Application No. 10-2023-0125115 and Korean Patent Application No. 10-2024-0125621 are incorporated by reference into this disclosure.

### [Background]

Secondary batteries, unlike primary batteries, are rechargeable and have been widely researched and developed in recent years due to the potential for miniaturization and large capacity. In addition, as the technological development and demand for mobile devices increases, the demand for secondary batteries as an energy source is increasing rapidly due to the increasing emphasis on electric vehicles and energy storage systems, etc. in response to the current environmental protection needs.

Secondary batteries are categorized into coin-type batteries, cylindrical batteries, prismatic batteries, and pouch-type batteries based on the shape of the battery case. In secondary batteries, an electrode assembly mounted on the inside of the battery case is a power generation element capable of charging and discharging and comprising a stacked structure of electrodes and separators.

Since secondary batteries are needed for continuous use for a long period of time, it is necessary to effectively control the heat generated during the charging and discharging process. When the secondary battery is not properly cooled, the increase in temperature causes an increase in current, and the increase in current causes another increase in temperature, resulting in a positive feedback chain reaction, eventually leading to the catastrophic condition of thermal runaway.

In addition, when the secondary batteries comprise a group in the form of a cell assembly such as a module or a pack, a thermal runaway occurring in any one of the secondary batteries causes a thermal propagation phenomenon in which the other adjacent secondary batteries are continuously overheated. In other words, when a thermal runaway occurs in a cell assembly in a battery pack, a large amount of conductive dust, gas, and flame are emitted from the high-voltage terminals of the cell assembly, and accordingly, dust accumulates on the high-voltage terminals of other adjacent cell assemblies, and a thermal propagation phenomenon is triggered by heat transfer by the gas and flame.

When thermal propagation occurs in the battery pack, the pressure and temperature of the inside of the battery pack increases rapidly. In response to such pressure and temperature increases, the battery pack should maintain structural robustness for a considerable period of time. When the battery pack undergoes a structural collapse and outside air flows in, the combustion reaction is rapidly activated, causing a great risk of fire and explosion, etc. outside the pack.

The lid that seals the upper surface of the pack case of a battery pack is usually made of a metal plate that is relatively thin in thickness compared to other surfaces of the pack case. This is so that in the event of an event such as thermal propagation, the lid expands in response to a rapid increase in internal pressure to relieve the pressure rise. While the pressure rise is delayed by the lid expansion, a venting device mounted on the pack case operates to enable normal pressure discharge. In other words, the lid expansion due to internal pressure provides the start-up time necessary for the venting device to operate stably.

However, when the battery pack is mounted on the chassis of an electric vehicle, only a very limited margin space is often provided by various vehicle structures disposed on the upper surface of the battery pack. In this case, in the event of thermal propagation, the lid expansion is spatially restrained, and due to this, the internal pressure of the pack case is not adequately increased, thereby accelerating the thermal propagation phenomenon, or the pack case may cause an early structural collapse, resulting in serious safety problems such as fire or explosion, etc. Therefore, it is necessary to provide a method for appropriately mitigating the increase in internal pressure of the pack case at the beginning, even under the condition that the upper margin space of the battery pack is narrow.

### [Summary]

### [Technical Problem]

An object of the present disclosure is to provide a pack case that can effectively suppress a rapid increase in internal pressure due to thermal runaway occurrence, even in a pack mounting structure with extremely limited margin space for expansion of an upper lid by a vehicle chassis.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a pack case, in one example including a lower housing forming an accommodation space, a lower reinforcement plate mounted in the accommodation space of the lower housing and configured to support at least one or more cell assembly, and an upper housing coupled to the lower housing to seal the accommodation space, wherein a mechanical strength of the lower housing is smaller than a mechanical strength of the lower reinforcement plate.

The lower reinforcement plate may further include a side wall in contact with the lower housing, and a bottom plate formed with at least one ventilation hole.

Moreover, the pressure of the sealed accommodation space may be applied to the lower housing through the least one ventilation hole of the lower reinforcement plate when a thermal runaway occurs in the cell assembly.

In one embodiment, the side wall of the lower reinforcement plate may be bonded to the lower housing.

Further, a gap may be formed between the bottom plate and the lower housing.

The least one ventilation hole may include corner holes formed by cutting out corners of the lower reinforcement plate.

In addition, the least one ventilation hole may further include inner holes formed at an inner section of the lower reinforcement plate.

Here, the cell assembly may be provided in plurality, and the inner holes may be formed between adjacent cell assemblies of the plurality of cell assemblies.

According to such a pack case of the present disclosure, when the thermal runaway occurs in the cell assembly causing an increase in an internal pressure of the pack case, the increased internal pressure is applied to the lower housing, and the lower housing expands to relieve the increased internal pressure.

Meanwhile, according to an embodiment of the present disclosure, an intumescent fire-retardant coating may be located between the lower housing and the lower reinforcement plate.

The intumescent fire-retardant coating may undergo a volume expansion by a high temperature gas flowing in through the least one ventilation hole, forming an insulation layer that fills the space of the expanded lower housing due to the increase in internal pressure.

In one embodiment, the lower reinforcement plate may be in a form of a plate without a side wall, and the edge of the bottom plate in which the at least one ventilation hole is formed may be bonded or coupled to the lower housing.

The bottom surface of the lower housing includes a ring-shaped edge part, and a stepped bottom surface extending in an outwardly protruding form with respect to the ring-shaped edge part, wherein an edge of the lower reinforcement plate may be bonded or coupled to the ring-shaped edge part.

In one embodiment, the cell assembly has a lower venting structure, wherein the lower reinforcement plate includes a bottom plate with ventilation holes formed therein, wherein the ventilation holes may be arranged to be aligned to face a venting device provided in the cell assembly.

In one embodiment, a thickness of a bottom of the lower housing may be less than a thickness of a side surface of the lower housing.

In an embodiment, the lower housing may have a ring-shaped side and a bottom in a form of a plate, and the ring-shaped side and the bottom may be coupled together.

A thickness of the bottom of the lower housing may be less than a thickness of the ring-shaped side of the lower housing.

The lower housing may include different materials for the ring-shaped side and the bottom.

### [Advantageous Effects]

As such, the pack case of the present disclosure includes a dual structure of a lower reinforcement plate supporting a cell assembly, and a lower housing having a lower stiffness than the lower reinforcement plate. Accordingly, when a thermal runaway occurs in the pack case and the internal pressure increases rapidly, the pressure is applied to the lower housing through a ventilation hole in the lower reinforcement plate, and the lower housing on which the pressure is applied may expand.

The internal pressure increased by the volume expansion of the lower housing is relieved, and a stable pressure discharge is obtained by operating a venting device while the rapid pressure increase is delayed. As such, the pack case of the present disclosure can prevent structural collapse of the pack case by appropriately relieving the pressure increase in the beginning of the occurrence of a thermal runaway. In particular, the pack case of the present disclosure may be suitable for mounting on an electric vehicle in which a very limited margin space is provided toward the upper surface of the pack case by various structures, since the lower housing includes an expanding structure.

However, the technical effects that can be obtained through the present disclosure is not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a perspective view of a pack case according to one embodiment of the present disclosure.
FIG. 2 is an exploded perspective view of the pack case of FIG. 1.
FIG. 3 is a plan view of a pack case with an upper housing removed.
FIG. 4 is a cross-sectional view taken along "A-A" line of FIG. 1.
FIG. 5 is a drawing illustrating another embodiment of FIG. 4.
FIG. 6 is a drawing illustrating a lower housing in the event of thermal runaway.
FIG. 7 is a cross-sectional view according to another embodiment of the present disclosure.
FIG. 8 is a drawing illustrating a lower housing in the pack case of FIG. 7 in the event of thermal runaway.
FIG. 9 is a drawing illustrating an embodiment of a pack case including a lower reinforcement plate in the form of a plate.
FIG. 10 is a drawing illustrating one embodiment of a pack case in which a bottom surface of a lower housing forms a two-step structure.
FIG. 11 is a drawing illustrating one embodiment of a pack case suitable for accommodating a cell assembly having a lower venting structure.
FIG. 12 is a drawing illustrating one embodiment of a pack case having a structure with a thinner thickness of a bottom surface compared to a side surface of a lower housing.
FIG. 13 is a drawing illustrating one embodiment of a pack case in which a lower housing comprises a two-piece structure.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a pack case, in one example, including a lower housing forming an accommodation space, a lower reinforcement plate mounted in the accommodation space of the lower housing and supporting at least one cell assemblies, and an upper housing coupled to the lower housing to seal the accommodation space, wherein a mechanical strength of the lower housing is smaller than a mechanical strength of the lower reinforcement plate.

Moreover, the pressure of the sealed said accommodation space may be applied to the lower housing through the ventilation holes of the lower reinforcement plate.

Thus, the pack case of the present disclosure comprises a dual structure of a lower reinforcement plate supporting a cell assembly, and a lower housing having a lower stiffness than the lower reinforcement plate. Accordingly, when a thermal runaway occurs in the pack case and the internal pressure increases rapidly, the pressure is applied to the lower housing through ventilation holes in the lower reinforcement plate, and the lower housing on which the pressure is applied may expand.

The internal pressure increased by the volume expansion of the lower housing is relieved, and a stable pressure discharge is obtained by operating the venting device while the sudden pressure increase is delayed, and by appropriately relieving the pressure increase in the beginning, structural collapse of the pack case can be prevented. In particular, the pack case of the present disclosure may be appropriate for application to an electric vehicle in which a very limited upper margin space is provided by various structures disposed toward the upper surface of the pack case, since the lower housing forms an expanding structure.

### [Detailed Description]

Hereinafter, specific embodiments of a pack case 10 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first embodiment]

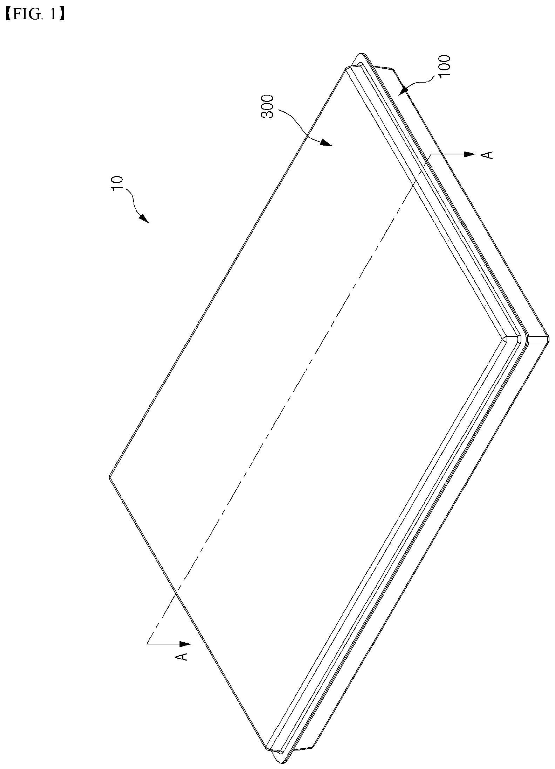

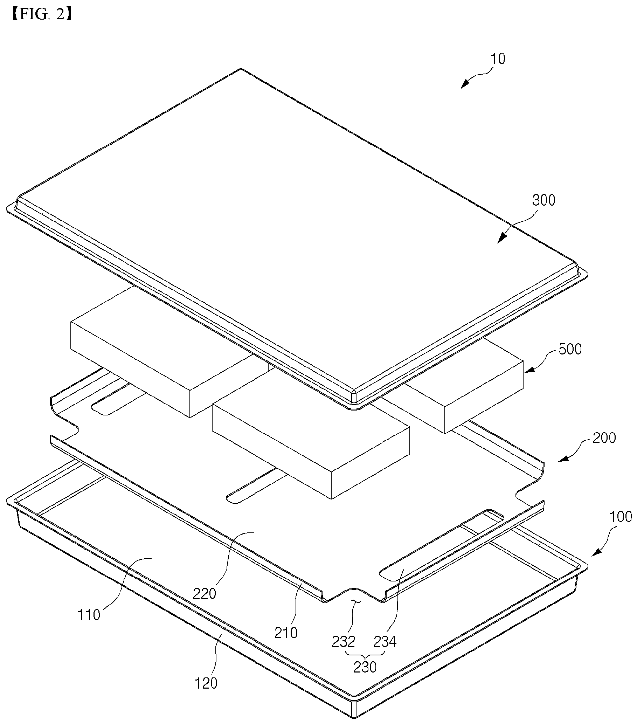

FIG. 1 is a perspective view of a pack case 10 according to one embodiment of the present disclosure, and FIG. 2 is an exploded perspective view of the pack case 10 of FIG. 1. Referring to the drawings, the pack case 10 of the present disclosure may include a lower housing 100, a lower reinforcement plate 200, and an upper housing 300.

The lower housing 100 and the upper housing 300 mutually couple to form at least one sealed accommodation space. In particular, the lower housing 100 may form an accommodation space large enough to accommodate at least the lower reinforcement plate 200 and the plurality of cell assemblies 500. In the illustrated embodiment, the lower housing 100 and the upper housing 300 are each shown as halved to form a one accommodation space. However, this is an exemplary embodiment, and the upper housing 300 may be configured in the form of a flat lid, in which case the lower housing 100 may form most of the accommodation space of the pack case 10.

As used herein, the cell assembly 500 refers to an aggregation of a plurality of secondary cells structurally bound into one. As used herein, the plurality of secondary batteries being structurally bound into one is not meant to be construed in the limited meaning of being separated from one another by a structure such as a case, but is rather meant to be construed in the meaning that the cell assembly 500 has structural independence from one another that is distinguishable from one another. Accordingly, the cell assembly 500 may also be referred to as a battery module, a battery block, or the like, depending on the specific embodiment, but has a more general meaning. In addition, in the accompanying drawings, the shape of the cell assembly 500 and battery cell 510 is depicted as a simple prismatic shape for the ease of description and illustration, but this is merely one example. Accordingly, the pack case 10 of the present disclosure should not be construed as being limited to any particular form factor, such as a coin type battery, cylindrical battery, prismatic battery, pouch-type battery, or the like.

The lower reinforcement plate 200 is a structure supporting at least one cell assemblies 500. The lower reinforcement plate 200 is mounted within an accommodation space of the lower housing 100. For example, the lower reinforcement plate 200 may comprise a side wall 210 that contacts the lower housing 100 and a bottom plate 220 that supports the cell assembly 500. For stable installation of the lower reinforcement plate 200, the side wall 210 of the lower reinforcement plate 200 may be bonded to the lower housing 100. However, the bottom plate 220 of the lower reinforcement plate 200 is not bonded to the lower housing 100. In other words, the bottom plate 220 of the lower reinforcement plate 200 and the inner surface of the lower housing 100 are separated from each other.

In addition, the mechanical strength of the lower housing 100 is smaller than the mechanical strength of the lower reinforcement plate 200. For example, the thickness of the lower housing 100 may be thinner than the thickness of the lower reinforcement plate 200. Alternatively, the material of the lower housing 100 may be more ductile than the material of the lower reinforcement plate 200. Alternatively, the lower housing 100 may be thinner and more ductile in both thickness and material. As a result, when the same force is applied, the lower housing 100 deforms more and earlier than the lower reinforcement plate 200. Accordingly, the reference herein to the mechanical strength of the lower housing 100 being less than the mechanical strength of the lower reinforcement plate 200 should be broadly interpreted to mean that the lower housing 100 expands more easily than the lower reinforcement plate 200 when the internal pressure of the pack case 10 is increased.

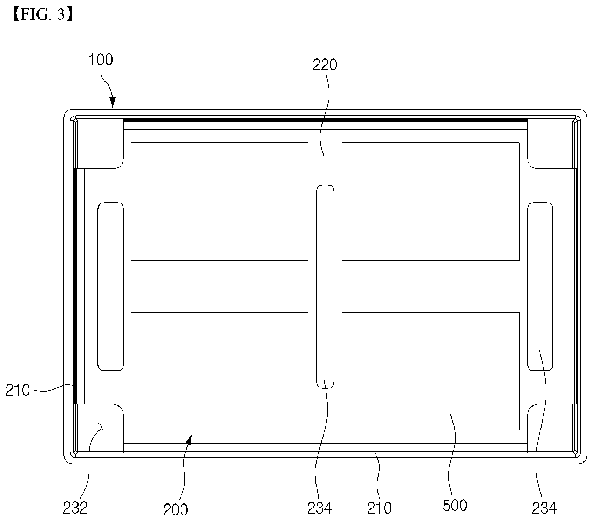

Referring to FIGS. 2 and 3, at least one ventilation holes 230 are formed in the bottom plate 220 of the lower reinforcement plate 200. The ventilation holes 230 serve as passageways for communicating with each other the accommodation space divided into two by the lower reinforcement plate 200. For example, when thermal runaway occurs in any of the cell assemblies 500 supported on the lower reinforced plate 200, resulting in an increase in internal pressure, the increased pressure is applied to the lower housing 100 through the ventilation holes 230.

The ventilation holes 230 need to be configured such that when thermal runaway occurs in any of the battery cell 510 of the cell assembly 500 mounted in the pack case 10, or in any of the cell assemblies 500 when a plurality of cell assemblies 500 is mounted, the resulting increased pressure and high temperature gases are quickly transferred to the lower housing 100. For this, the ventilation holes 230 may be provided in a plurality.

An exemplary form in which the plurality of ventilation holes 230 are disposed is illustrated in FIG. 3. The plurality of ventilation holes 230 may include corner holes 232 formed by cutting out corners of the lower reinforcement plate 200. The corner holes 232 may be plural and may be formed at each of the four corners of the lower reinforcement plate 200 considering symmetrical disposition. The corner holes 232 are formed at the corners of the lower reinforcement plate 200 because cutting out the corners of the lower reinforcement plate 200 may have less impact on the structural rigidity for stably supporting the cell assembly 500.

Alternatively, in some embodiments, as shown in FIG. 3, the plurality of ventilation holes 230 may include inner holes 234 that partially cut inner section of the lower reinforcement plate 200. This is because the corner holes 232 are located at the corners of the lower reinforcement plate 200, which may cause a time delay for high temperature gases to flow toward the lower housing 100 in the event of thermal runaway in the central area. In this case, the stiffness of the lower reinforcement plate 200 may need to be designed to be sufficient to support the cell assembly 500, considering the inner hole 234. For example, when a plurality of cell assemblies 500 are mounted, the plurality of inner holes 234 may be uniformly formed in a symmetrical form that passes between adjacent cell assemblies 500.

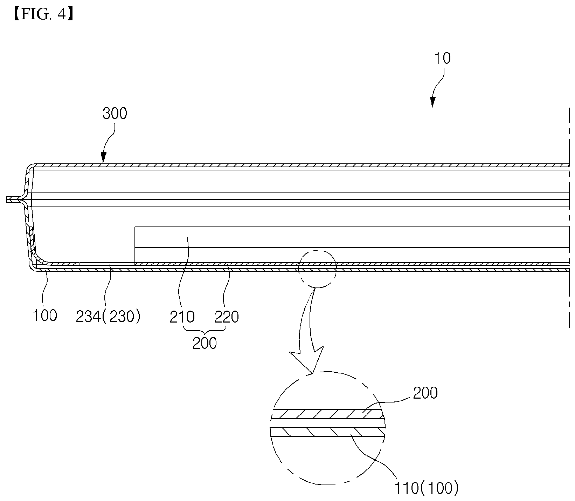

FIG. 4 is a cross-sectional view taken along "A-A" line of FIG. 1. Referring to FIG. 4, the side wall 210 of the lower reinforcement plate 200 is bonded to the lower housing 100, and the bottom plate 220 of the lower reinforcement plate 200 is spaced apart from the lower housing 100.

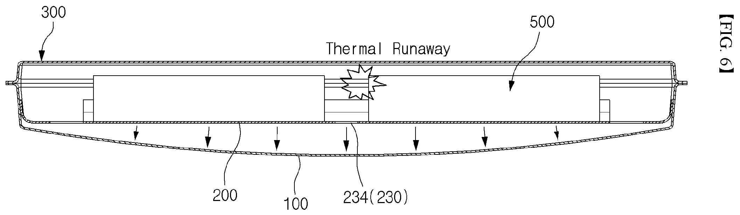

FIG. 6 is a drawing illustrating a lower housing in the event of thermal runaway, and when thermal runaway occurs in the cell assembly 500 mounted in the pack case 10, resulting in high temperature gases and increased internal pressure, the increased pressure may be applied to the bottom surface of the lower housing 100 through the corner holes 232 of the lower reinforcement plate 200. As described above, the mechanical strength of the lower housing 100 is smaller than the mechanical strength of the lower reinforcement plate 200. Accordingly, as shown in FIG. 6, the lower housing 100, which has a weaker stiffness, expands under pressure, and the pressure increase in the inside of the pack case 10 may be relieved to the extent that the increase in volume due to the expansion of the lower housing 100.

By operating the venting device while the rapid pressure increase is delayed due to the volume increase caused by the expansion of the lower housing 100, stable pressure discharge is obtained, and in addition, structural collapse of the pack case 10 is prevented by appropriately relieving the pressure increase in the beginning of the thermal runaway occurrence. In particular, since the pack case 10 of the present disclosure has a structure in which the lower housing 100 expands, as illustrated exemplarily in FIG. 6, the pack case 10 is applicable to a case in which the upper surface of the pack case 10 has almost no margin space due to various structures. For example, the pack case 10 of the present disclosure is appropriate for use as a case for a battery pack that is mounted on the lower part of the chassis of an electric vehicle, that is, a battery pack that is mounted so that the upper housing 300 is toward the chassis of the electric vehicle and the lower housing 100 is toward the ground.

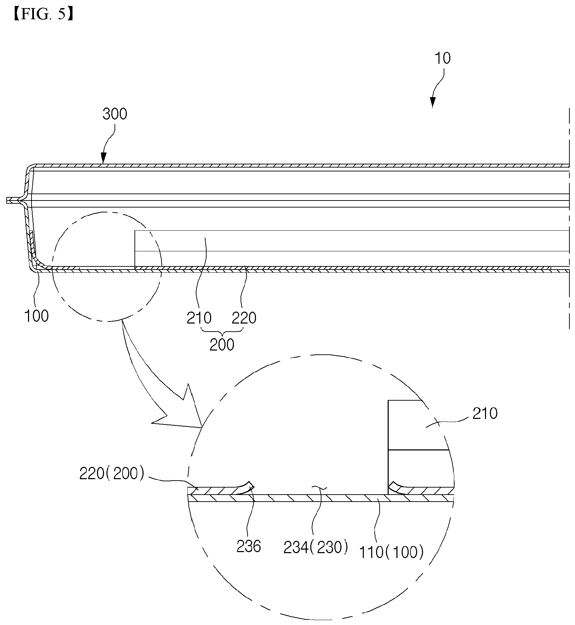

Meanwhile, FIG. 5 is a drawing illustrating another embodiment of FIG. 4. In the embodiment of FIG. 5, the side wall 210 of the lower reinforcement plate 200 is bonded to the lower housing 100, and the bottom plate 220 of the lower reinforcement plate 200 is in contact with the lower housing 100. Since the bottom plate 220 of the lower reinforcement plate 200 is in contact with and supported by the lower housing 100, the lower housing 100, which has a weak stiffness, is less likely to be damaged, deformed, or generate abnormal noise. However, the bottom plate 220 of the lower reinforcement plate 200 and the lower housing 100 are adhered to, and pressure relief through the ventilation hole 230 may not occur smoothly. To solve this problem, as shown in the partially enlarged view of FIG. 5, at least a portion of the area around the ventilation hole 230 of the bottom plate 220 may be made to form a gap 236 with respect to the lower housing 100. Such a gap 236 can facilitate the flow of internal pressure toward the lower housing 100. Such a configuration of the gap 236 formed around the ventilation hole 230 is one exemplary embodiment, and the gap 236 structure may not be present when the bottom plate 220 of the lower reinforcement plate 200 and the lower housing 100 are not bonded to each other.

### [second embodiment]

As such, according to the pack case 10 of the present disclosure, when thermal runaway occurs in the mounted cell assembly 500, resulting in an increase in internal pressure, the increased pressure is applied to the lower housing 100 through the ventilation hole 230, and the pressurized lower housing 100 expands to expand the interior space to relieve the increased pressure.

The lower housing 100, which is designed to have relatively weak stiffness, and particularly the bottom surface of the lower housing 100, is mostly made with a thin thickness. As the thickness is thin, it can be easily expanded in response to an increase in internal pressure. However, in the event of a thermal runaway, in addition to the increase in the internal pressure of the pack case, considerable heat is generated by the high temperature gas. The high temperature gas is also flowed in toward the bottom surface of the lower housing 100 through the ventilation hole 230 of the lower reinforcement plate 200. When the bottom surface of the lower housing 100 expands due to pressure, more high temperature gas is gathered in the expanded space, which causes the bottom surface of the lower housing 100 to become high temperature. As a result, the lower housing 100 of the pack case 10 may act as a heat source of an external fire.

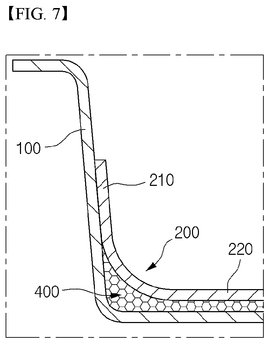

A second embodiment of the present disclosure further includes a configuration for effectively suppressing the application of high temperatures to the outside through the lower housing 100 when the bottom surface of the lower housing 100 is expanded by thermal runaway. FIG. 7 illustrates a cross-sectional view of the lower reinforcement plate 200 and the lower housing 100 according to a second embodiment of the present disclosure.

Referring to FIG. 7, an intumescent fire-retardant coating 400 is coated between the lower housing 100 and the lower reinforcement plate 200. Specifically, the intumescent fire-retardant coating 400 may be coated on the bottom surface of the lower housing 100 or the lower surface of the lower reinforcement plate 200. The intumescent fire-retardant coating 400 has a characteristic of foaming when exposed to high temperature, and can be a dried coating layer under normal temperature. When the dry coating layer of such intumescent fire-retardant coating 400 is foamed by high temperature, the dry coating layer may turn into an insulation layer (e.g., a carbonization layer) that has expanded in volume by tens of times. The expanded insulation layer may delay heat transfer for a predetermined period.

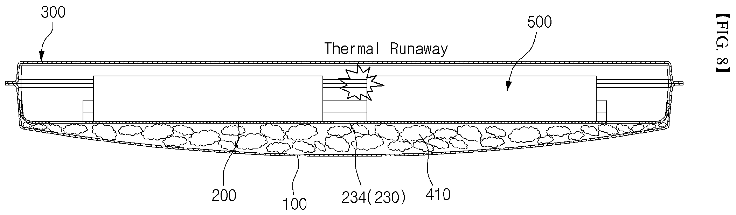

FIG. 8 is a drawing illustrating a lower housing 100 in the pack case 10 of FIG. 7 in the event of thermal runaway. When the intumescent fire-retardant coating 400 is coated between the lower housing 100 and the lower reinforcement plate 200, the intumescent fire-retardant coating 400 is exposed to the high temperature gas flowed in through the ventilation hole 230 as the lower housing 100 expands due to pressure in the event of a thermal runaway. Accordingly, the intumescent fire-retardant coating 400 expands in volume by tens of times due to the high temperature, thereby forming an insulation layer 410 that fills the space of the expanded lower housing 100 due to the increased internal pressure.

The foamed insulation layer 410 generated by the intumescent fire-retardant coating 400 does not prevent pressure from being applied to the lower housing 100. Instead, it may provide insulation against high temperature gases gathered within the expanded lower housing 100, thereby preventing the pack case 10 from acting as a heat source to cause an external fire in its surroundings.

### [third embodiment]

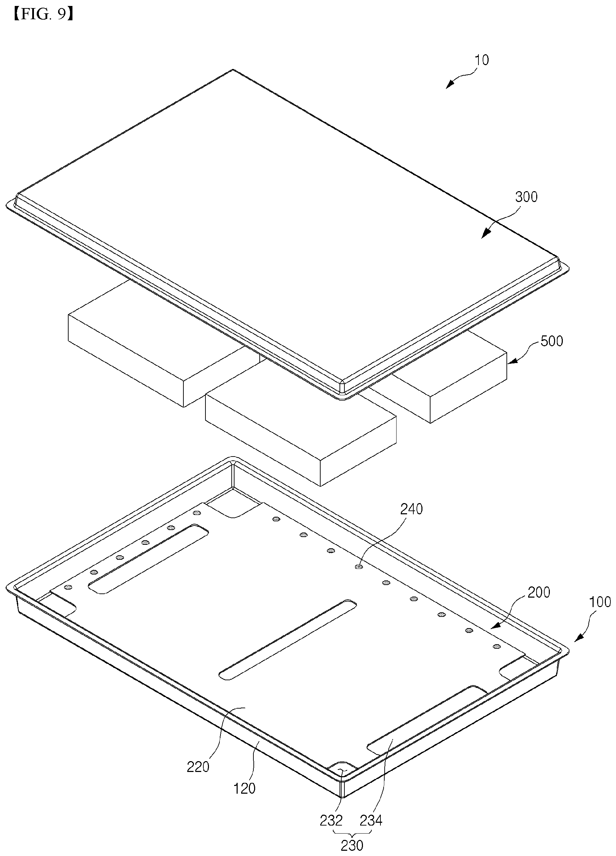

FIG. 9 illustrates another embodiment of a pack case 10 of the present disclosure. In the embodiment of FIG. 9, the lower reinforcement plate 200 comprises a bottom plate 220 without a side wall 210. In other words, the lower reinforcement plate 200 is in the form of a plate and includes the ventilation holes 230 in its configuration, except without the side wall 210. In other words, the ventilation holes 230 may be in plurality, and may include a corner hole 232 and/or an inner hole 234.

The lower reinforcement plate 200, which is in the form of a plate, has its edges bonded to a lower housing 100. For example, a plurality of welding points 240 may be formed along an edge of the lower reinforcement plate 200 by spot welding. Except for the welding points 240, the remaining portion of the lower reinforcement plate 200 is bonded to but not mutually adhered to the lower housing 100. Thus, as shown in FIG. 6, when thermal runaway occurs in the cell assembly 500 mounted in the pack case 10, resulting in high temperature gases and increased internal pressure, the lower housing 100 may expand due to the increased pressure.

Here, the edges of the lower reinforcement plate 200 are described as being bonded to the lower housing 100 by spot welding, but it may also be possible for them to be bonded by continuous welding rather than spot welding, or to be mutually coupled by other fastening mechanism such as bolts or rivets, etc.

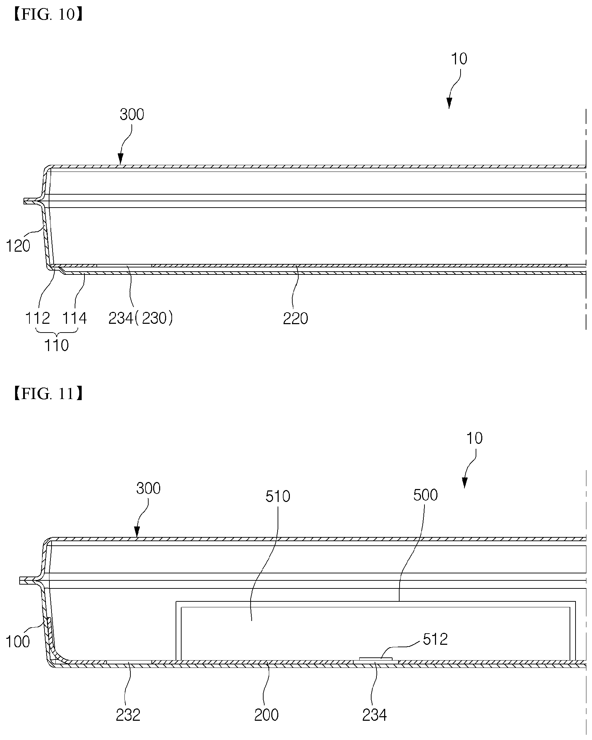

FIG. 10 illustrates another embodiment of the pack case 10 with a lower reinforcement plate 200 in the form of a plate. In the embodiment of FIG. 10, the lower housing 100 has a two-step structure in which the bottom surface 110 includes a ring-shaped edge part 112, and a stepped bottom surface 114 extending in an outwardly protruding form with respect to the edge part 112. In the lower housing 100 having such a two-step structure, the ring-shaped edge part 112 is a region where the edges of the lower reinforcement plate 200, which is in the form of a plate, are bonded or coupled, and the stepped bottom surface 114 corresponds to a region of the bottom surface 110 of the lower housing 100 that expands due to an increase in internal pressure. The stepped bottom surface 114 forms a gap with respect to the bottom plate 220 of the lower reinforcement plate 200, and such a gap may facilitate pressure applied through the ventilation hole 230.

### [fourth embodiment]

FIG. 11 is a drawing illustrating one embodiment of a pack case 10 suitable for accommodating a cell assembly 500 having a lower venting structure. Here, a cell assembly 500 having a lower venting structure may refer to a venting device 512 provided in one or more of the battery cells 510 comprising the cell assembly 500, such as a cell assembly 500 having a rupture disk disposed on a lower portion toward the lower housing 100. Alternatively, even though the venting device provided in the battery cell 510 may be disposed on a surface other than the bottom, such as an upper surface, it may refer to a venting structure such that the venting device provided in the cell assembly 500 is disposed on the bottom toward the lower housing 100, eventually resulting in a high pressure gas release toward the lower housing 100. While FIG. 11 shows the venting device 512 of the battery cell 510 disposed on the bottom surface, this should be understood as one exemplary embodiment, and the cell assembly 500 itself may be provided with a venting device in accordance with the above-mentioned definition of the lower venting structure.

Referring to FIG. 11, the formation position of the inner hole 234 disposed in the inner side of the ventilation hole 230 of the lower reinforcement plate 200 is aligned to face the venting device 512 of the battery cell 510 included in the cell assembly 500. Thus, when the venting device 512 of the battery cell 510 is operated to release a high-pressure gas, at least a portion of the gas pressure can be directly applied to the bottom surface 110 of the lower housing 100. The immediate and direct pressure relief can cause the bottom surface 110 of the lower housing 100 to undergo expansion deformation in a more rapid time period, thereby inducing pressure relief from an early stage of rising pressure in the interior of the pack case 10.

The disposition of the ventilation holes 230 in the lower reinforcement plate 200 considering the lower venting structure as shown in FIG. 11 is applicable to both the first to third embodiments described above.

### [fifth embodiment]

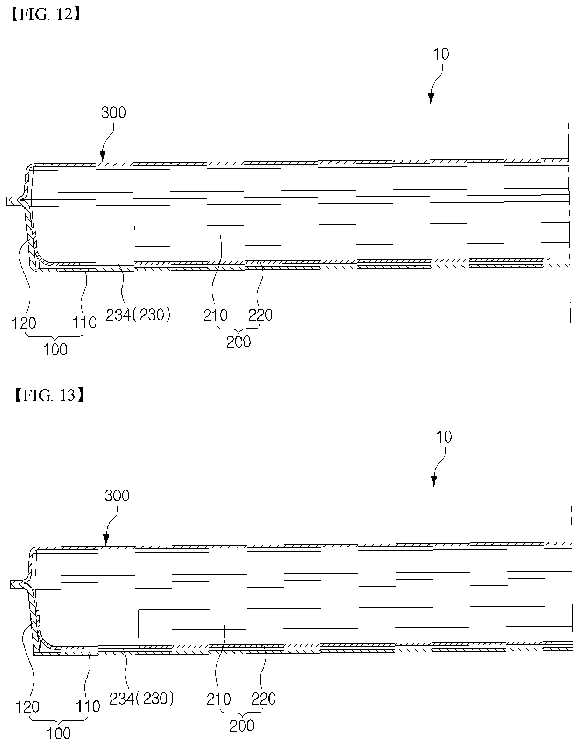

FIGS. 12 and 13 are drawings illustrating different embodiments of the lower housing 100. Specifically, FIG. 12 relates to an embodiment in which the side surface 120 and the bottom surface 110 of the lower housing 100 have different thicknesses, and FIG. 13 relates to an embodiment of a two-piece structure in which the side surface 120 and the bottom surface 110 of the lower housing 100 are separate from each other.

Referring to FIG. 12, a structure with a thinner thickness of the bottom surface 110 compared to the side surface 120 of the lower housing 100 can be obtained. By forming the bottom surface 110 of the lower housing 100 with a thinner thickness, it becomes easier to relatively reduce the mechanical strength of only the bottom surface while maintaining a favorable overall mechanical strength of the lower housing 100. For example, by press processing using a mold, the lower housing 100, which is a one-piece structure and has a thinner thickness of the bottom surface 110 than the side surface 120, can be manufactured.

Referring to FIG. 13, an embodiment is also possible in which the side surface 120 and the bottom surface 110 are manufactured as separate components and then mutually coupled to complete the lower housing 100. According to such a two-piece structure, the lower housing 100 includes a ring-shaped side surface 120 and a bottom surface 110 in the form of a plate, and an edge portion of the bottom surface 110 to the ring-shaped side surface 120 is mutually coupled to form the lower housing 100.

According to the embodiment of FIG. 13, the process of coupling the ring-shaped side surface 120 and the bottom surface 110 in the form of a plate is added, but the lower housing 100 has the advantage of increased design freedom. For example, in order to make the mechanical strength of the bottom surface 110 smaller compared to the side surface 120, it is easy to make a structure in which the thickness of the bottom surface 110 is thinner compared to the side surface 120 of the lower housing 100 of FIG. 12. Alternatively, the bottom surface 110 and the side surface 120 of the lower housing 100 may be made of different materials. Alternatively, the side surface 120 may be made of an extrusion-molded product having a hollow part reinforced with ribs for light weight and ensuring stiffness, while the bottom surface 110 may be made of a conventional metal plate.

The lower housing 100 having the two-piece structure of FIG. 13, when coupling the side surface 120 and the bottom surface 110, it is necessary to obtain a sealed coupling. This is because the overall airtightness of the pack case 10 needs to be maintained. The sealed coupling between the side surface 120 and the bottom surface 110 of the lower housing 100 may be obtained by welding. For example, the side surface 120 and the bottom surface 110 may be mutually bonded by continuous welding. Alternatively, it may be possible to use a combination of structural couplings, such as bolts or rivets, and airtightness couplings, such as brazing welding.

As aforementioned, the present disclosure has been described in more detail through the drawings and embodiments. However, since the configuration described in the drawings or embodiments described herein is merely one embodiment of the present disclosure and do not represent the overall technical spirit of the disclosure, it should be understood that the disclosure covers various equivalents, modifications, and substitutions at the time of filing of this application.

### [Description of Reference Numerals]

10: pack case
100: lower housing
110: bottom surface
112: edge part
114: stepped bottom surface
120: side surface
200: lower reinforcement plate
210: side wall
220: bottom plate
230: ventilation hole
232: corner hole
234: inner hole
236: gap
240: welding point
300: upper housing
400: intumescent fire-retardant coating
410: insulation layer (foam layer)
500: cell assembly
510: battery cell
512: venting device

## Claims

1. A pack case, comprising:
a lower housing forming an accommodation space;
a lower reinforcement plate mounted in the accommodation space of the lower housing, and configured to support a cell assembly; and
an upper housing coupled to the lower housing to seal the accommodation space,
wherein a mechanical strength of the lower housing is smaller than a mechanical strength of the lower reinforcement plate.

2. The pack case of claim 1, wherein the lower reinforcement plate further comprises:
a side wall in contact with the lower housing, and
a bottom plate formed with at least one ventilation hole.

3. The pack case of claim 2, wherein a pressure is applied to the lower housing through the at least one ventilation hole of the lower reinforcement plate when a thermal runaway occurs in the cell assembly.

4. The pack case of claim 2, wherein the side wall of the lower reinforcement plate is bonded to the lower housing.

5. The pack case of claim 4, wherein a gap is formed between the bottom plate and the lower housing.

6. The pack case of claim 2, wherein the at least one ventilation hole comprises corner holes formed at corners of the lower reinforcement plate.

7. The pack case of claim 6, wherein the at least one ventilation hole further comprises inner holes formed at an inner section of the lower reinforcement plate.

8. The pack case of claim 7, wherein the cell assembly is provided in plurality, and the inner holes are formed between adjacent cell assemblies of the plurality of cell assemblies.

9. The pack case of claim 3, wherein when the thermal runaway occurs in the cell assembly causing an increase in an internal pressure of the pack case, the increased internal pressure is applied to the lower housing, and the lower housing expands to relieve the increased internal pressure.

10. The pack case of claim 9, wherein an intumescent fire-retardant coating is located between the lower housing and the lower reinforcement plate.

11. The pack case of claim 10, wherein the intumescent fire-retardant coating undergoes a volume expansion by a high temperature gas flowing in through the at least one ventilation hole, forming an insulation layer that fills the space of the expanded lower housing due to the increase in internal pressure.

12. The pack case of claim 1, wherein the lower reinforcement plate is in a form of a plate without a side wall, and an edge of the bottom plate in which the at least one ventilation hole is formed is bonded or coupled to the lower housing.

13. The pack case of claim 12, wherein a bottom surface of the lower housing comprises a ring-shaped edge part, and a stepped bottom surface extending in an outwardly protruding form with respect to the ring-shaped edge part,
wherein an edge of the lower reinforcement plate is bonded or coupled to the ring-shaped edge part.

14. The pack case of claim 1, wherein the cell assembly has a lower venting structure,
wherein the lower reinforcement plate comprises a bottom plate with ventilation holes formed therein, and
wherein the ventilation holes are arranged to be aligned to face a venting device provided in the cell assembly.

15. The pack case of claim 1, wherein a thickness of a bottom of the lower housing is less than a thickness of a side of the lower housing.

16. The pack case of claim 1, wherein the lower housing has a ring-shaped side and a bottom in a form of a plate, and the ring-shaped side and the bottom are coupled together.

17. The pack case of claim 16, wherein a thickness of the bottom of the lower housing is less than a thickness of the ring-shaped side of the lower housing.

18. The pack case of claim 16, wherein the lower housing comprises different materials for the ring-shaped side and the bottom.
